# EUROPÄISCHE PATENTSCHRIFT

(11) **EP 1 515 056 B1**
(45) Veröffentlichungstag und Bekanntmachung des Hinweises auf die Patenterteilung: **11.10.2006**
(21) Anmeldenummer: 03450193.2
(22) Anmeldetag: 01.09.2003
(51) Int. Cl.: F16C 29/02, B66C 23/697

(54) **Kran mit Gleitelement**
Crane with sliding element
Grue avec elément de glissement

(43) Veröffentlichungstag der Anmeldung: 16.03.2005
(73) Patentinhaber: Palfinger AG, A-5101 Bergheim (AT)
(72) Erfinder: Wimmer, Eckhard, 5400 Hallein (AT)
(74) Vertreter: Hofinger, Stephan

(56) Entgegenhaltungen:
- WO-A-95/16145
- DE-A- 2 442 285
- US-A- 3 719 403
- US-A- 5 639 177
- PATENT ABSTRACTS OF JAPAN vol. 1999, no. 03, 31. März 1999 (1999-03-31) & JP 10 330083 A (NTN CORP), 15. Dezember 1998 (1998-12-15)
- PATENT ABSTRACTS OF JAPAN Bd. 2002, Nr. 05 03 Mai 2002 & JP 2002 008328 A (SANKYO SEIKI MFG CO LTD.) 11 Januar 2002

## Beschreibung

Die vorliegende Erfindung betrifft einen Kran mit einem teleskopierbaren Kranarm mit mindestens zwei gegeneinander verschiebbaren Schubarmen, wobei zwischen den Schubarmen mindestens ein Gleitelement angeordnet ist, das in einem Rahmen lose gelagert ist. Ein solcher Kran ist aus WO 95/16145 A1 bekannt.

Zwischen zwei Schubarmen angeordnete Gleitelemente sollen den Reibungswiderstand beim gegenseitigen Verschieben der Schubarme beim Ein- und Ausfahren gering halten. Dabei ist wesentlich, dass die Gleitelemente an vorbestimmten Stellen unverrückbar gelagert sind, um in jeder Relativposition der Schubarme wirksam zu sein. Es wurde daher bereits vorgeschlagen, die Gleitelemente mit einem der Schubarme zu verkleben oder zu verschrauben. Da sich die Gleitelemente jedoch mit der Zeit abnützen und ausgetauscht werden müssen, ist diese Art der Befestigung ungünstig für eine rasche und problemlose Austauschbarkeit.

Alternativ dazu wurde versucht, die Gleitelemente in einem Metallrahmen zu halten, wobei der Metallrahmen deutlich niedriger als die Dicke der Gleitelemente ausgebildet sein muss, um nicht bei der Relativbewegung der Schubarme mit der Gegenfläche in Kontakt zu kommen. Dies hat zur Folge, dass in der Vergangenheit manchmal abgenützte Gleitelemente über den niedrigen Metallrahmen hinweg aus der Lagerstelle herausgeschoben wurden.

Aufgabe der vorliegenden Erfindung ist es, die bekannten Gleitelemente dahingehend weiter zu entwickeln, dass sowohl eine stabile Lagerung sowie auch eine rasche Austauschbarkeit sichergestellt sind.

Dies wird erfindungsgemäß dadurch erreicht, dass das Gleitelement ein über die Gleitfläche des Gleitelementes vorstehendes, gesondertes Federelement aufweist.

Durch das über die Gleitfläche des Gleitelementes vorstehende Federelement wird das Gleitelement immer mit der von der Gleitfläche abgewandten Seite auf die Auflagefläche gedrückt, wodurch ein Verlassen auch sehr niedrig ausgebildeter Halterahmen verhindert wird.

In einer besonders einfachen und stabilen Ausführungsform ist das Federelement als Blattfeder ausgebildet.

Um die Kontaktfläche des Federelementes mit der Gegenfläche möglichst gering zu halten, ist es günstig, wenn das Federelement in einer Ausnehmung im Gleitelement gelagert ist.

Die Funktionssicherheit lässt sich dadurch erhöhen, dass das Federelement insbesondere durch seitliche Vorsprünge von der Wand der Ausnehmung gegen Herausfallen gesichert ist.

Vorzugsweise wird das Gleitelement aus Kunststoff hergestellt. In diesem Zusammenhang ergibt sich die Möglichkeit, statt der Blattfeder mitgespritzte Federelemente aus Kunststoff vorzusehen.

Weitere Vorteile und Einzelheiten der vorliegenden Erfindung ergeben sich aus der nachfolgenden Figurenbeschreibung. Dabei zeigt:
Fig. 1 einen Schubrahmen eines teleskopierbaren Kranarmes, in dem zwei Gleitelemente gelagert sind,
Fig. 2a einen Längsschnitt durch zwei im Querschnitt rechteckige Schubarme beim Lastfall "Heben",
Fig. 2b einen Längsschnitt durch diese Schubarme beim Lastfall "Drücken" und
Fig. 3 eine perspektivische Detailansicht eines in einem Rahmen gelagerten Gleitelements.

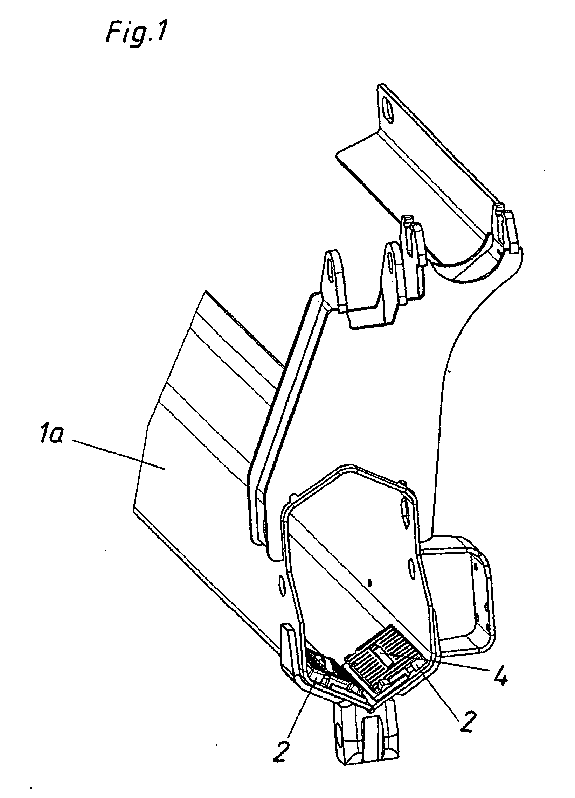

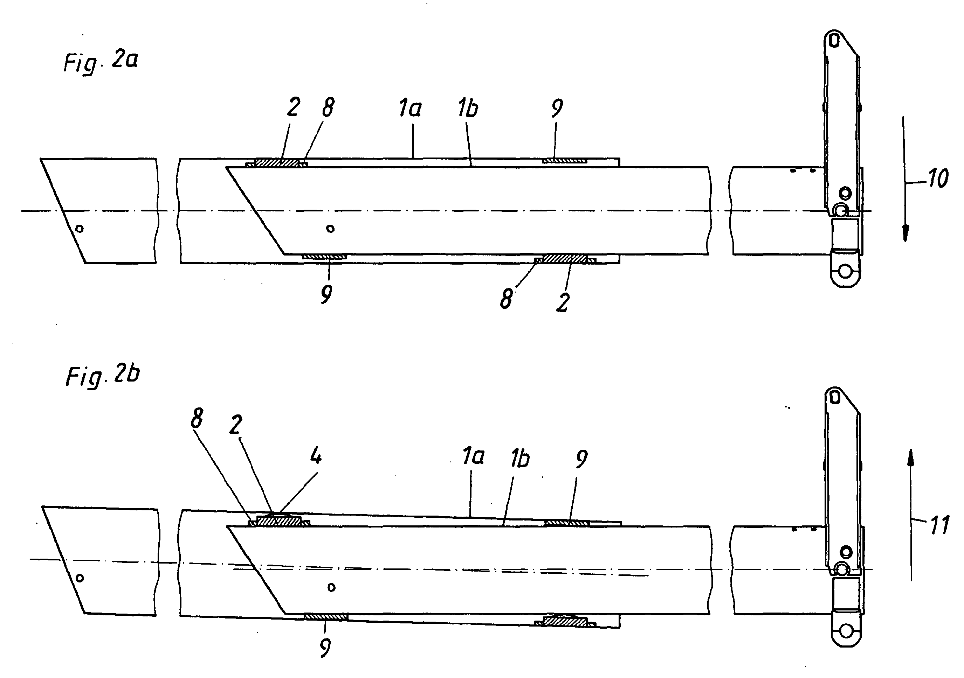

In den Figuren 1, 2a und 2b sind zwei Schubarme eines teleskopierbaren Kranarmes in vereinfachter Form dargestellt. Der in Fig. 1 gezeigte Schubarm 1a weist einen sechseckigen Querschnitt auf, sodass die Gleitelemente 2 jeweils paarweise in den beiden Boden- und Deckflächen angeordnet sind. Figuren 2a und 2b gehen hingegen von einem rechteckigen Querschnitt der Schubarme 1a und 1b aus, sodass jede Lagerstelle von einem einzigen Gleitelement 2 gebildet wird.

Die Schubarme 1a und 1b sind in Längsrichtung gegeneinander verschiebbar. Bei dem in Fig. 2a dargestellten Lastfall, bei dem eine Last eine Kraft in Richtung des Pfeils 10 aufbringt, wird der innere Schubarm 1b gegen die Lagerstellen links oben und rechts unten gedrückt. Im umgekehrten, eher seltenen Fall, der in Fig. 2b dargestellt ist, wirkt die Kraft in Richtung des Pfeils 11. In diesem Fall werden die Hilfsgleitelemente 9 beansprucht, die aufgrund der Seltenheit dieses Lastfalls normalerweise wesentlich einfacher gestaltet sind, als die Gleitelemente 2. Die Hilfsgleitelemente 9 müssen auch kaum ausgetauscht werden.

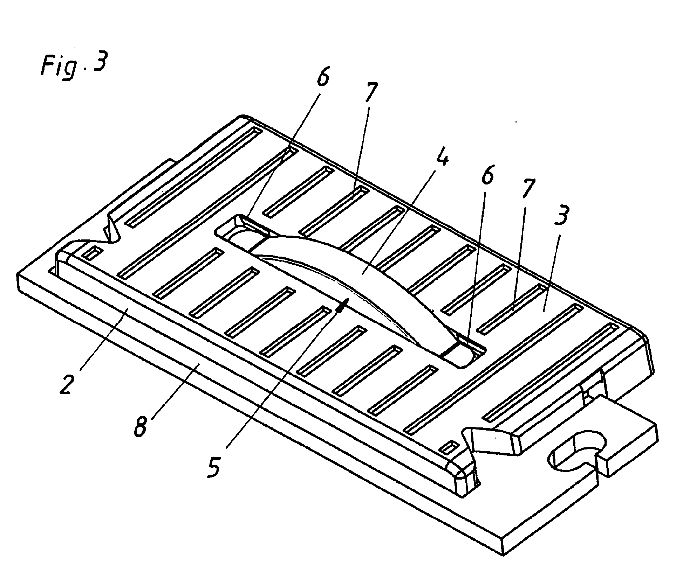

Wie Fig. 3 im Detail zeigt, besteht das Gleitelement 2 aus einem flachen Kunststoffblock. In die Gleitfläche 3 sind Vertiefungen 7 in Form länglicher Nuten eingearbeitet, die Schmiermittel aufnehmen können. Im Neuzustand und nach jeder Wartung werden die Vertiefungen 7 mit Schmiermittel gefüllt, um den Reibungskoeffizienten zusätzlich herabzusetzen.

Das Gleitelement 2 weist eine zentrale Ausnehmung 5 auf, in die ein Federelement 4 in Form einer vorgespannten Blattfeder eingesetzt ist. Diese Federform hat sich besonders bewährt. Es sind jedoch auch Spiralfedern und beliebige andere Federungen vorstellbar, die in ihrer Wirkung vergleichbar sind. Die Blattfeder wird an ihren Enden durch die Vorsprünge 6 gegen Herausfallen gesichert und steht im Mittelbereich über die Gleitfläche 3 des Gleitelementes 2 deutlich über. Selbst wenn die Gegenfläche von der Gleitfläche 3 des Gleitelementes 2 abhebt, stellt das Federelement 4 sicher, dass das Gleitelement 2 nach wie vor mit Druck beaufschlagt ist und dadurch auf den Untergrund gepresst wird. Der um das Gleitelement 2 vorgesehene Metallrahmen 8 kann daher sehr nieder ausgebildet werden, um sicherzustellen, dass er keinesfalls mit der Gegenfläche in Kontakt kommt.

Sowohl die Blattfeder kann bei einem Defekt leicht ausgetauscht werden, wie auch das Gleitelement 2, das lediglich lose im Rahmen 8 ruht, mit der Unterfläche jedoch nicht verschraubt oder verklebt ist.

## Patentansprüche

1. Kran mit einem teleskopierbaren Kranarm mit mindestens zwei gegeneinander verschiebbaren Schubarmen (1a, 1b), wobei zwischen den Schubarmen (1a, 1b) mindestens ein Gleitelement (2) angeordnet ist, das in einem Rahmen (8) lose gelagert ist, **dadurch gekennzeichnet, dass** das Gleitelement (2) ein über die Gleitfläche (3) des Gleitelements (2) vorstehendes, gesondertes Federelement (4) aufweist.

2. Kran nach Anspruch 1, **dadurch gekennzeichnet, dass** das Federelement (4) als Blattfeder ausgebildet ist.

3. Kran nach Anspruch 1 oder 2, **dadurch gekennzeichnet, dass** das Federelement (4) insbesondere in einer Ausnehmung (5) im Gleitelement (2) gelagert ist.

4. Kran nach einem der Ansprüche 1 bis 3, **dadurch gekennzeichnet, dass** das Federelement (4) insbesondere durch seitliche Vorsprünge (6) von der Wand der Ausnehmung (5) gegen Herausfallen gesichert ist.

5. Kran nach einem der Ansprüche 1 bis 4, **dadurch gekennzeichnet, dass** in der Gleitfläche (3) Vertiefungen (7) für Schmiermittel vorgesehen sind.

6. Kran nach einem der Ansprüche 1 bis 5, **dadurch gekennzeichnet, dass** das Gleitelement aus Kunststoff ist.

## Claims

1. Crane with a telescopic crane arm with at least two sliding arms (1a, 1b) movable against each other, wherein at least one gliding element (2) is arranged between the sliding arms (1a, 1b), the gliding element (2) being loosely housed in a frame (8), **characterised in that** the gliding element (2) has a separate spring element (4) projecting over the gliding surface (3) of the gliding element (2).

2. Crane according to claim 1, **characterised in that** the spring element (4) is developed as a leaf spring.

3. Crane according to claim 1 or 2, **characterised in that** the spring element (4) is housed particularly in a recess (5) in the gliding element (2).

4. Crane according to one of claims 1 to 3, **characterised in that** the spring element (4) is secured against falling out, in particular by lateral projections (6) from the wall of the recess (5).

5. Crane according to one of claims 1 to 4, **characterised in that** cavities (7) for lubricant are provided in the gliding surface (3).

6. Crane according to one of claims 1 to 5, **characterised in that** the gliding element is made of plastic.

## Revendications

1. Grue avec une flèche télescopique présentant au moins deux bras coulissants (1a, 1b) déplaçables l'un contre l'autre, au moins un élément de glissement (2) à logement mobile dans un cadre (8) étant disposé entre les bras coulissants (1a, 1b), **caractérisée en ce que** l'élément de glissement (2) comporte un élément à ressort (4) séparé, faisant saillie sur la surface de glissement (3) de l'élément de glissement (2).

2. Grue selon la revendication 1, **caractérisée en ce que** l'élément à ressort (4) est réalisé comme ressort à lame.

3. Grue selon la revendication 1 ou 2, **caractérisée en ce que** l'élément à ressort (4) est notamment logé dans une ouverture (5) de l'élément de glissement (2).

4. Grue selon l'une des revendications 1 à 3, **caractérisée en ce que** l'élément à ressort (4) est notamment fixé par des saillies latérales (6) empêchant celui-ci de tomber de la paroi d'ouverture (5).

5. Grue selon l'une des revendications 1 à 4, **caractérisée en ce que** des rainures (7) à lubrifiant sont prévues sur la surface de glissement (3).

6. Grue selon l'une des revendications 1 à 5, **caractérisée en ce que** l'élément de glissement est en matière plastique.
